# EUROPEAN PATENT SPECIFICATION

(11) **EP 2 316 049 B1**
(45) Date of publication and mention of the grant of the patent: **23.12.2015**
(21) Application number: 09782074.0
(22) Date of filing: 21.08.2009
(51) Int. Cl.: G02C 5/22

(54) **ELASTIC HINGE FOR A PAIR OF SPECTACLES**
ELASTISCHES SCHARNIER FÜR BRILLE
CHARNIÈRE ÉLASTIQUE POUR UNE PAIRE DE LUNETTES

(30) Priority: 21.08.2008 DE 202008011154 U
(43) Date of publication of application: 04.05.2011
(73) Proprietor: Theo BVBA, 2000 Antwerp (BE)
(72) Inventor: SOMERS, Willem, B-2000 Antwerp (BE); RABUT, Claude, F-39150 la Chaumusse (FR)
(74) Representative: LC Patents
(86) International application number: PCT/EP2009/060822
(87) International publication number: WO 2010/020686

(56) References cited:
- EP-A- 0 892 296
- AT-U1- 7 779
- DE-A1- 3 936 725
- US-A- 3 243 248
- US-A- 6 033 069

## Description

### Field of the Invention

The present invention relates to resilient hinges for pair of spectacles having a flat frame. Such hinges are known from AT 007 779 U1, EP 0 892 296 and US 6 033 069 . The resilient hinge has a structure as defined in claim 1. In a preferred embodiment, the slot comprising member is an integral part of the spectacle arm and the stopper comprising member is an integral part of the frame. In a particular embodiment the resilient hinge further comprises a positioning guide to control the movement of the resilient member and stud in the slot with respect to the other member.

### Description

Below is a further explanation on the present invention with reference to the attached drawings and embodiments.

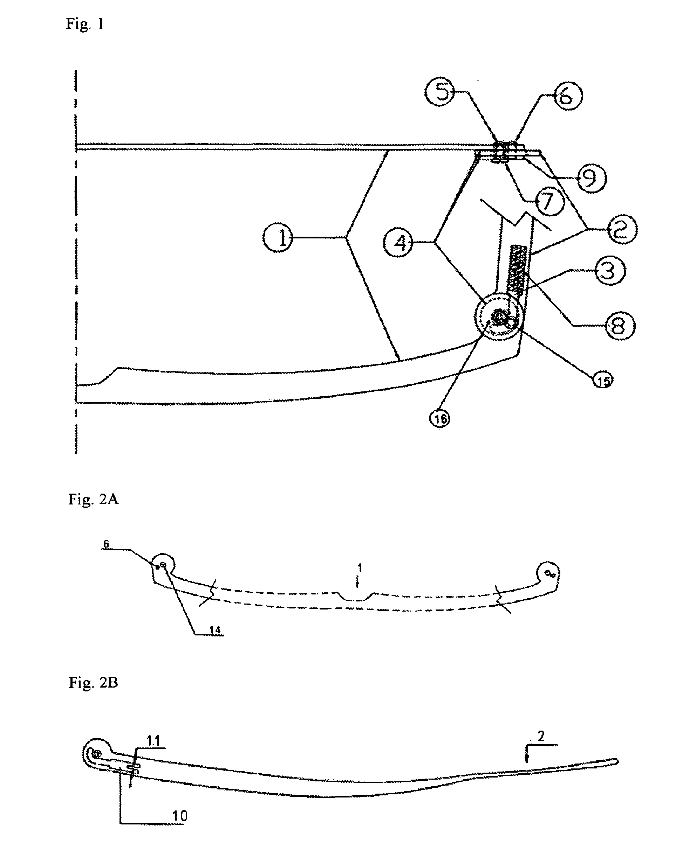

Figures 1 to 5 show one embodiment of the resilient hinge of the present invention, i.e. comprising two flat members (1) and (2), one (2) having a slot (10) to accommodate a resilient member (spring) (8) and a stud (3), the other (1) having a stopper (6), both members rotationally coupled to one another by linking means (7, 5). The flat members as used herein are typical between and about 1,5 to 0,5 mm thick, and in particular about 0,8 mm thick.

To accommodate the resilient member, the slot typically comprises at one end, means**(11)** to secure the resilient member in the slot, such as for example a circular pillar, a square pillar or a flat pin **(11)** in case of a spring **(8),** wherein said spring is fitted over the pillar or pin. In a particular embodiment of the present invention the means to secure the resilient member consists of a flat pin **(11).** As is evident to the skilled artisan, the dimensions of the means to secure the resilient member are determined by the dimensions of slot **(10).** The flat pin will typically have the same thickness as the flat member (typical between and about 1,5 to 0,5 mm thick, and in particular about 0,8 mm thick), the width and the length of the pin will depend on the resilient member used and as shown in the examples, in the particular embodiments of the present invention the width is between and about 0,2 to 4,0 mm width; in particular between and about 0,5 and 1,5 mm width; more in particular about 0,6 mm width. In the particular embodiments of the present invention the length of the flat pin between and about 0,2 to 4,0 mm long; in particular between and about 1,0 and 3,0 mm width; more in particular about 2,3 mm long. In one embodiment of the present invention, said means **(11)** to secure the resilient member in the slot, is at the distal end vis-à-vis the linking means **(7, 5).**

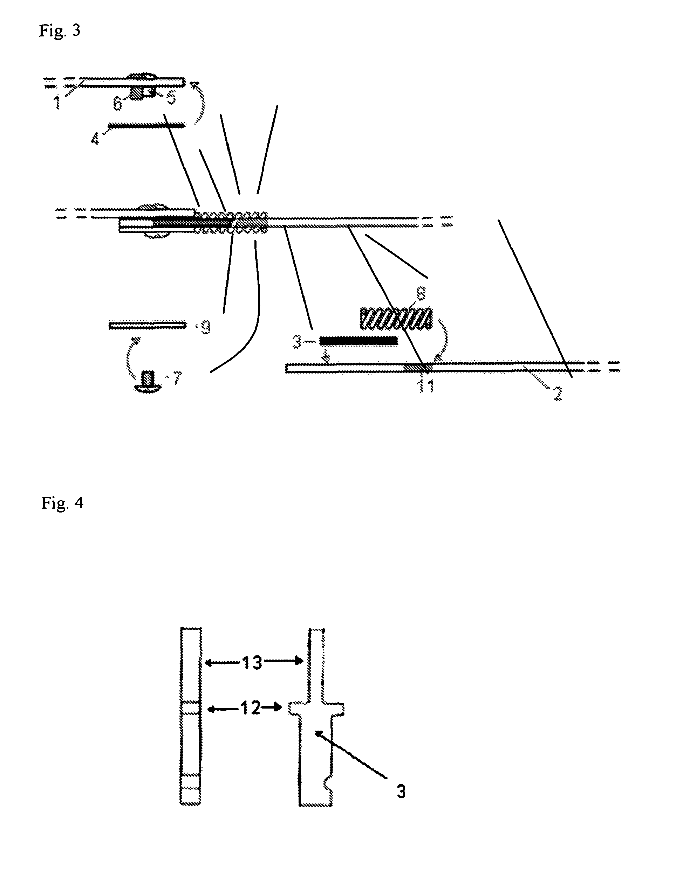

As shown in Figure 4, and explained in more detail hereinafter, the end portion of said means **(11)** to secure the resilient member, will, in combination with the size and shape of the stud **(3),** act as a stopper and determine the degree of over-open position that can be tolerated by the resilient hinge presented herein.

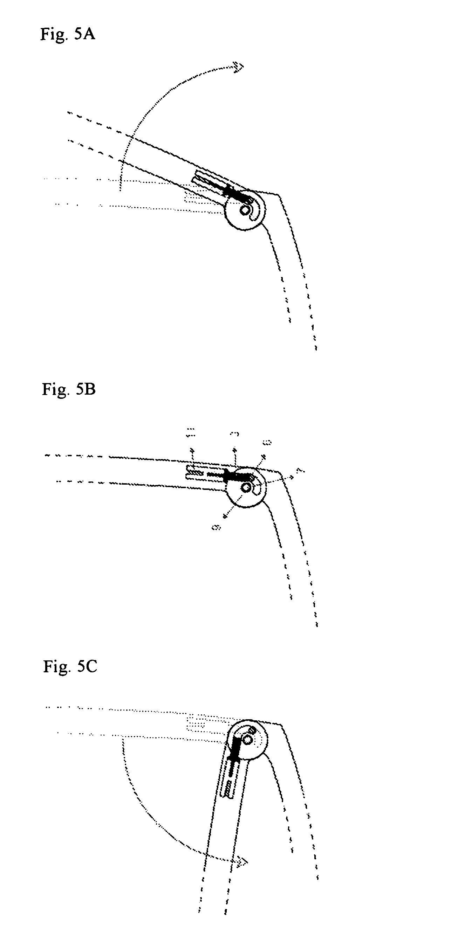

At the opposite end the resilient member is secured in the slot by means of a removable stud **(3)** (Figure 5A - 5C), shaped to fit the slot at said end. Given the flat shape of the slot comprising member **(2),** the stud consist of a flat structure (typical between and about 1,5 to 0,5 mm thick, and in particular about 0,8 mm or 0,5 mm thick), shaped to fit the slot and optionally comprises protrusions **(12),** like knuckles, rims, flanges or hooks, which serve to fix the stud in the slot under the resilient action of the resilient member (spring), i.e. by pressing the stud against the proximal end of the slot. The stud further comprises means **(13)** to hold the resilient member in position, such as for example a circular pillar, a square pillar or a flat pin **(13)** in case of a spring **(8),** wherein said spring is fitted over the pillar or pin. In a particular embodiment of the present invention said means to secure the resilient member at the end of the stud consists of a flat pin **(13).** As is evident to the skilled artisan the dimensions of means **(13)** to hold the resilient member are similar, in particular identical to the dimensions of the means **(11)** to secure the resilient member in the slot. In one embodiment of the present invention, the stud is shaped to fit the slot at the proximal end vis-à-vis the linking means **(5, 7).** In analogy with the flat pin **(11),** the stud will typically have the same thickness as the flat member (supra), and slide-able fits in its width, with the width of the slot **(10)** at said end (typical between and about 0,5 to 5,0 mm width, in particular about 0,5 mm or 2,5 mm width, more in particular about 1,4 mm width).

A further feature of the slot is that it extends beyond and fits over the stopper **(6)** at the other flat member **(1)** of the resilient hinge, and has a curvature end shape at the proximal end of the linking pin.

In its combination, the size and shape of the means **(11)** to secure the resilient member in the slot; the size and shape of the stud **(3),** with in particular the size and shape of the means **(13)** to secure the resilient member at the distal end of the stud; and the stopper **(6)** at the other flat member **(1)** of the resilient hinge; determine the degree of over-open position that can be tolerated by the resilient hinge presented herein. As shown in Figure 5A, in case both means **(11, 13)** to secure the resilient member consist of a flat pin, the end portions of said pins will be pressed against one another and act as a stopper, preventing further stretch of the resilient hinge in the over-open position (Figure 5A). In said over-open position, the stopper **(6)** will be pushing the stud **(3)** towards the distal end of the slot (distal vis-à-vis the stopper **(6)**).

The stopper **(6)** can consist of any material such as a screw, rivet, or bolt and may even consist of protrusion as an integrated part of flat member **(1).** The stopper is positioned aside the positioning hole **(14)** that accommodates the linking means **(7,5),** such that it fits within slot **(10).** In closed position (Figure 5C), the slot **(10)** touches the stopper **(6)** at its curved proximal end, and the latter accordingly restricts further closure of the hinge. When opened, the slot slides in its movement over the stopper **(6),** until the proximal end of the stud **(3)** touches the stopper **(6).** At this point (Figure 5B), a first resistance under the resilient action of the resilient member **(8),** is observed. Further opening of the hinge results in the over-open position (Figure 5A), as mentioned above.

The two members are rotationally coupled to one another by any means known to the skilled man and include in a particular embodiment the screw **(7)** and tube **(5),** as exemplified herein. Any material can be used, but the linking means is typically of metallic material such as titanium, titanium alloy, copper, copper alloy, stainless steel, iron or ferroalloy etc. The members **(1),** and **(2),** that constitute the spectacle frame and arm(s), can be manufactured in different plastic, metallic or ceramic materials known in the field, and can be produced according to different manufacturing techniques known to the skilled artisan, such as for example injection, sintering, cutting and folding.

As already mentioned hereinbefore, in a particular embodiment the resilient hinge further comprises a positioning guide **(9)** to control the movement of the resilient member and stud in the slot with respect to the other member. The positioning guide is positioned at the opposite end of the slot-comprising member **(2),** when compared with the position of the stopper comprising member **(1).** Together with the latter it accordingly flanges part of the slot **(10),** and creates a chamber to restrict vertical movement of the stud **(3)** in the slot **(10).** The positioning guide could have any shape fitting said purpose, and in particular consist of a puck **(9)** with a diameter that covers the curved proximal end of slot **(10).** It is typically between 1,0 and 0,2 mm thick, in particular about 0,5 mm thick, with a diameter ranging from 10,0 to 5,0 mm. In a further embodiment the positioning guide could be an integrated part of the linking means, for example when the screw head of the **screw (7)** has a diameter that covers the curved proximal end of slot **(10),** such as for example with a diameter a about 10,0 to 5,0 mm. Optionally, the hinge further comprises two sliding pucks **(4),** situated at either side of the slot comprising member **(2)** with one opening **(15)** to accommodate the stopper **(6),** and one opening to accommodate the linking means **(7, 5).** These sliding pucks, not only improve the sliding of two members of the resilient hinge vis-à-vis each other, it also plays a guiding role to maintain the stability of the specific movement of the resilient member and stud in the slot with respect to the other member. The sliding pucks typically have a slightly smaller diameter as compared to the positioning guide **(9),** such as for example about 8,0 to 4,0 mm.

The accompanying drawings show schematically, and by way of example, one embodiment of hinges according to the invention. In the drawings:
- **Fig. 1**: is a front (upper panel) view and top view (lower panel) of one embodiment of the flat member(s) resilient hinge according to the present invention.
- **Fig. 2A**: is a top view of the spectacle arms consisting of the slot **(10)** comprising member of the resilient hinge according to the present invention.
- **Fig. 2B**: is a top view of the spectacle frame consisting of the stopper comprising member of the resilient hinge according to the present invention. Only the orifice to hold the stopper **(6)** is shown.
- **Fig. 3**: is side view of one embodiment of the resilient according to the present invention.
- **Fig. 4**: is a schematic drawing of a stud according to the invention, having a flat pin **(13)** to hold the spring and hook like protrusions **(12),** to fix the stud in the slot under the resilient action of the spring.
- **Fig. 5A - 5C**: are top views of three operational positions of the hinge, i.e. the closed position (Fig. 5C), the normal open position (Fig. 5B), and the over-open position (Fig. 5A).

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description

## Claims

1. A resilient spectacles hinge comprising two flat hinge members **(1, 2)** rotationally coupled to one another by linking means (7,5) one hinge member **(2)** having a **(10)** oriented perpendicularly to the hingeaxis to accommodate a resilient member **(8)** and a stud **(3)** arranged to actuate the resilient member; the other hinge member **(2) (1)** having a stopper **(6)** positioned aside the positioning hole **(14)**, such that it fits within the slot **(10)** and in combination with the stud **(3)** determines the degree of over-open position that can be tolerated by the resilient hinge.

2. A resilient hinge according to claim 1, wherein the resilient member **(8),** is a spring.

3. A resilient hinge according to claim 1, wherein the slot **(10),** comprises means **(11)** to secure the resilient member in the slot.

4. A resilient hinge according to claim 3, wherein the means **(11)** to secure the resilient member in the slot, consist of a flat pin.

5. A resilient hinge according to claim 1, wherein the stud comprises protrusions **(12),** which serve to fix the stud in the slot under the resilient action of the resilient member.

6. A resilient hinge according to claim 1, wherein the stud comprises means **(13),** to hold the resilient member in position.

7. A resilient hinge according to claim 1, wherein the means to secure the resilient member consists of a flat pin **(13).**

8. A resilient hinge according to claim 1, wherein the slot **(10)** extends beyond and fits over the stopper **(6),** and has a curvature end shape at the proximal end of the linking means **(7), (5).**

9. A resilient hinge as defined in any one of claims 1 to 8, further comprising a positioning guide **(9)**.

10. A resilient hinge according to claim 9, wherein the positioning guide **(9),** is positioned at the opposite end of the slot-comprising member **(2),** when compared with the position of the stopper comprising member **(1).**

11. A resilient hinge according to claim 9, wherein the positioning guide **(9)** consists of a puck with a diameter that covers the curved proximal end of slot **(10).**

12. A resilient hinge according to claim 9, wherein the positioning guide **(9)** is an integrated part of the linking means **(7), (5).**

13. A resilient hinge according to claim 9, further comprising two sliding pucks **(4),** situated at either side of the slot comprising member, with one opening **(15)** to accommodate the stopper **(6),** and one opening to accommodate the linking means **(7), (5).**

## Patentansprüche

1. Ein biegsames Brillenscharnier, das aus zwei flachen Scharnierteilen **(1), (2)** besteht, die durch in einem eine Scharnierachse bildendes Positionierungselement **(14)** empfangene Verbindungsmittel rotatorisch aneinander gekoppelt sind, wobei eines der Scharnierteile **(2)** über einen senkrecht zur Scharnierachse stehenden Steckplatz **(10)** zur Aufnahme eines biegsamen Teils **(8)** und eines einschlägig zur Betätigung des biegsamen Teils platzierten Bolzens **(3)** verfügt; und wobei das andere Scharnierteil **(1)** über einen in einer Weise neben dem Positionierungsloch **(14)** angebrachten Stöpsel **(6)** verfügt, dass dieser in den Steckplatz **(10)** passt und in Kombination mit dem Bolzen **(3)** das Ausmaß der über-offenen Position bestimmt, das von dem biegsamen Scharnier noch toleriert werden kann.

2. Ein biegsames Scharnier gemäß Anspruch 1, wobei es sich bei dem biegsamen Teil **(8)** um eine Feder handelt.

3. Ein biegsames Scharnier gemäß Anspruch 1, wobei der Steckplatz **(10)** über Mittel **(11)** zur Sicherung des biegsamen Teils im Steckplatz verfügt.

4. Ein biegsames Scharnier gemäß Anspruch 3, wobei es sich bei dem Mittel **(11)** zur Sicherung des biegsamen Teils im Steckplatz um einen flachen Stift handelt.

5. Ein biegsames Scharnier gemäß Anspruch 1, wobei der Bolzen mit vorstehenden Teilen **(12)** zur Befestigung des Bolzens im Steckplatz bei einer Verbiegung des biegsamen Teils versehen worden ist.

6. Ein biegsames Scharnier gemäß Anspruch 1, wobei der Bolzen über Mittel **(13)** zur Fixierung der Position des biegsamen Teils verfügt.

7. Ein biegsames Scharnier gemäß Anspruch 1, wobei es sich bei dem Mittel zur Sicherung des biegsamen Teils um einen flachen Stift **(13)** handelt.

8. Ein biegsames Scharnier gemäß Anspruch 1, wobei sich der Steckplatz **(10)** über den Stöpsel ausdehnt **(6)** und diesen bedeckt und am proximalen Ende der Verbindungsmittel **(7), (5)** in einer gebogenen Form endet.

9. Ein biegsames Scharnier entsprechend den Ansprüchen 1 bis 8, das ferner eine Positionierungshilfe **(9)** umfasst.

10. Ein biegsames Scharnier gemäß Anspruch 9, wobei die Positionierungshilfe **(9)** am entgegengesetzten Ende des Teils mit dem Steckplatz angebracht ist **(2),** aus der Sicht des Teils mit dem Stöpsel **(1).**

11. Ein biegsames Scharnier gemäß Anspruch 9, wobei die Positionierungshilfe **(9)** aus einem Puck mit einem Durchmesser besteht, der das gebogene proximale Ende des Steckplatzes bedeckt **(10).**

12. Ein biegsames Scharnier gemäß Anspruch 9, wobei die Positionierungshilfe **(9)** als Teil mit den Verbindungsmittel **(7), (5)** integriert wurde.

13. Ein biegsames Scharnier gemäß Anspruch 9, das ferner zwei gleitende Pucks **(4)** umfasst, die sich jeweils auf den beiden Seiten des Teils mit dem Steckplatz befinden, wobei eine Öffnung **(15)** zur Aufnahme des Stöpsels **(6)** und eine andere Öffnung zur Aufnahme der Verbindungsmittel **(7), (5)** dient.

## Revendications

1. Des charnières à élastique de lunettes comprenant deux éléments de charnière plats **(1), (2)** raccordés en rotation l'un à l'autre par des moyens de liaison reçus dans un logement pour le positionnement **(14)** définissant l'axe charnière, un élément de charnière **(2)** dotée d'une fente **(10)** orientée perpendiculairement à l'axe charnière pour loger un élément élastique **(8)** et un goujon **(3)** disposé pour actionner l'élément de charnière ; l'autre élément de charnière **(1)** muni d'un butoir **(6)** positionné à côté du trou de positionnement **(14),** de manière à ce qu'il s'insère dans la fente **(10)** et qu'en combinaison avec le goujon **(3),** il détermine le niveau de la position ouverte au-dessus pouvant être toléré par la charnière à élastique.

2. Une charnière à élastique selon la revendication 1, dans laquelle l'élément élastique **(8)** est un ressort.

3. Une charnière à élastique selon la revendication 1, dans laquelle la fente **(10),** comprend les moyens **(11)** de bloquer l'élément élastique dans la fente.

4. Une charnière à élastique selon la revendication 3, dans laquelle les moyens **(11)** de blocage de l'élément élastique dans la fente sont composés d'une broche plate.

5. Une charnière à élastique selon la revendication 1, dans laquelle le goujon comprend des protubérances **(12)** qui servent à le fixer dans la fente sous l'action élastique de l'élément élastique.

6. Une charnière à élastique selon la revendication 1, dans laquelle le goujon comprend les moyens **(13** de maintenir l'élément élastique en position.

7. Une charnière à élastique selon la revendication 1, dans laquelle les moyens de blocage de l'élément élastique sont composés d'une broche plate **(13).**

8. Une charnière à élastique selon la revendication 1, dans laquelle la fente **(10)** se prolonge et s'adapte au butoir **(6),** et a une forme finale courbe à l'extrémité proximale des moyens de liaison **(7), (5).**

9. Une charnière à élastique comme définie dans l'une quelconque des revendications 1 à 8, comprenant encore un guide de positionnement **(9).**

10. Une charnière à élastique selon la revendication 9, dans laquelle le guide de positionnement **(9)** est positionné à l'extrémité opposée de l'élément comprenant la fente **(2),** par rapport à la position de l'élément comprenant la fente **(1).**

11. Une charnière à élastique selon la revendication 9, dans laquelle le guide de positionnement **(9)** se compose d'une rondelle dont le diamètre couvre l'extrémité proximale courbe de la fente **(10).**

12. Une charnière à élastique selon la revendication 9, dans laquelle le guide de positionnement **(9)** est un élément intégré des moyens de liaison **(7), (5)**.

13. Une charnière à élastique selon la revendication 9, comprenant encore deux rondelles mobiles **(4),** situées de chaque côté de l'élément de charnière comprenant la fente, avec une ouverture **(15)** pour loger le butoir **(6)** et une ouverture pour loger les moyens de liaison **(7), (5).**
